# EUROPEAN PATENT APPLICATION

(11) **EP 1 524 856 A1**
(43) Date of publication of application: **20.04.2005**
(21) Application number: 03023533.7
(22) Date of filing: 15.10.2003
(51) Int. Cl.: H04N 7/01, H04N 5/44

(54) **Method for processing video signals**

(71) Applicant: Sony International (Europe) GmbH, 10785 Berlin (DE)
(72) Inventor: Erdler, Oliver c/o Stuttgart Technology Center, 70327 Stuttgart (DE)
(74) Representative: Müller - Hoffmann & Partner

(57) **Abstract**

A method for processing video signals is disclosed comprising steps of receiving (S1) an input video signal (IV), processing (S2) said input video signal (IV) thereby generating a processed video signal (PV), and outputting (S3) said processed video signal (PV) as an output video signal (OV). The step of processing (S2) comprises a step of generating (S24) scene specific data (SSD) and the step of controlling (S23), at least a step of motion estimation (S21) or a step of frame rate conversion (S22) of said processing step (S2). According to the present invention the step of controlling (S23) uses or is based on said scene specific data (SSD) to accordingly reconfigure said step of motion estimation (S21) or said step of frame rate conversion (S22).

## Description

The present invention relates to a method for processing video signals as well as to a respective apparatus, a computer program product, and a computer readable storage medium. The present invention particularly relates to a method and a system for processing video signals thereby realizing scene adaptive and complexity reduced frame rate conversion.

To achieve a comparable high picture quality in frame rate conversion applications, respective video signal processing methods and systems are based on distinct methods for picture analysis and on the respective picture analysis data. Especially, so-called true motion vectors or true motion vector fields derived from the incoming video signals are of particular importance. As the picture quality strongly depends on the quality of the process of motion estimation and the quality of the derived motion vectors, the process of deriving said motion vectors is a crucial point. However, it is known in the art that processes of estimating motion and of deriving respective motion vectors do not produce in each case motion vectors in a satisfactory and sufficient manner. Therefore, it has been suggested to include within the video signal processing certain steps of post-processing the initially derived motion vectors so as to improve the quality of said motion vectors.

However, known steps and additional processing strategies induce an increased computational load if realized in software or additional equipment in the sense of processing modules or units. Therefore, the countermeasures which have to be taken to improve the quality of the motion estimation process and therefore of the picture quality itself are time-consuming and due to the increased amount of computational capacity and equipment comparable expensive.

It is an object of the present invention to provide a method and an apparatus for processing video signals which are capable of producing output video signals of a comparable high quality with a comparable reduced computational burden in a reliable manner.

The object is achieved by a method for processing video signals according to the characterizing features of independent claim 1. Preferred embodiments of the inventive method are within the scope of the dependent sub-claims. Further aspects of the present invention are an apparatus, a computer program product, and a computer readable storage medium according to independent claims 15, 20 and 21, respectively.

The inventive method for processing video signals comprises the steps of: receiving and/or providing an input video signal, of processing said input video signal to thereby generate a processed video signal, and of providing and/or outputting said processed video signal or a derivative thereof as an output video signal. The step of processing said input video signal comprises at least one step of picture content analysis, in particular a step of motion estimation and/or at least one step of video processing, in particular a step of frame rate conversion, each of which with respect to said input video signal. According to the present invention said step of processing said input video signal further comprises at least a step of generating and/or providing scene specific data and a step of controlling at least said step of picture content analysis, in particular said step of motion estimation and/or said step of video processing, in particular said step of frame rate conversion. The step of generating and/or providing said scene specific data is done with respect to said input video signal and/or its content. Said derived and/or provided scene specific data are designed to be descriptive with respect to at least one picture scene of pictures and/or of video sequences represented by or contained in said input video signal. As a further aspect of the present invention said step of controlling uses or is based on said scene specific data, in particular to thereby accordingly reconfigure at least said step of picture content analysis, in particular said step of motion estimation and/or said step of video processing, in particular said step of frame rate conversion for a scene adaptive processing and/or to thereby enable a high picture quality at a comparable reduced burden of calculation.

It is therefore a basic idea of the present invention to provide and/or to generate on the basis of an input video signal scene specific data with respect to said input signal and/or with respect to its content. The scene specific data are descriptive for at least one picture scene of pictures or video sequences which are represented by or contained in said input video signal. According to the scene specific data the process or the step of motion estimation and/or the process or the step of frame conversion are adapted. Thereby, picture quality can be improved without the necessity of further or post-processing by means of additional post-processing steps and/or involving further post-processing modules can be avoided.

According to a further aspect of the present invention said step of controlling includes a step of generating and/or providing control data or control information.

Said control data or control information are used to control and/or to reconfigure the process of motion estimation, the process of frame rate conversion and/or further processes contained in the process step of the inventive method. Said control data or control information and/or its generation use and/or are based on the derived scene specific data. Alternatively or additionally, said control data or control information may comprise at least in part said scene specific data or a derivative thereof to realize the step of controlling and/or to reconfiguring the distinct processing steps.

According to a further preferred embodiment of the present invention, said step of controlling may include a step of supplying said control data or control information to at least said step of picture content analysis, in particular said step of motion estimation and/or to said step of video processing, in particular said step of frame rate conversion.

According to a further alternative of the inventive method for processing video signals, motion vector data, motion vector statistic data and/or a derivative thereof are used as scene specific data or as a part or pre-form thereof.

Accordingly, a step of generating and/or providing said motion vector data, said motion vector statistic data and/or the respective derivative thereof is provided and performed.

According to a preferred embodiment of the inventive method for processing video signals, said step of generating and/or providing said motion vector statistic data, and/or the derivative thereof is at least in part performed together with said step of picture content analysis, in particular said step of motion estimation and/or within said step of motion estimation and in particular within a respective common device, block or unit.

In addition or alternatively, according to the present invention and a further embodiment thereof said step of generating and/or providing said motion vector data, said motion vector statistic data and/or said derivative thereof is at least in part performed together with or within said step of controlling and/or in particular within a common device, block or unit.

Further in addition with respect to said motion vector statistic data, said motion vector statistic data and/or the respective derivative thereof, said data may be designed to include and/or to describe one or a plurality of the items from the group containing the items of absolute sum of vectors, in particular separately for x-components and y-components of motion vectors, sums of components of motion vectors in +x-, -x-, +y-, and/or -y-directions, number of all null vectors, respective sums over a part or parts of the field of motion vectors, vector histograms, and/or the like.

Sums of vectors may also be calculated after applying a coring process or the like.

Alternatively or additionally, picture statistic data or a derivative thereof may be used as scene specific data or as a part or pre-form thereof.

In this case a step of generating and/or providing said picture statistic data, and/or the respective derivative thereof is provided and performed.

Said step of generating and/or providing said picture statistic data and/or said derivative thereof may at least in part be performed together with or within said step of video processing, in particular said step of frame rate conversion and/or in particular within a common device, block or unit.

Additionally or alternatively, said step of generating and/or providing said picture statistic data may at least in part be performed together with or within said step of controlling and in particular within a common device, block or unit.

Said picture statistic data may preferably be designed to include and/or to describe one or a plurality of the items from the group containing the items of noise level, static pixel differences, motion compensated pixel differences, luminance histograms, and/or the like.

Said step of controlling and in particular said step of generating and/or providing said control data or control information includes or is realized by a step of scene classification realizing at least one or a plurality of cases from the group which contains the cases of camera mode, standard film mode, non-standard film mode, scene change mode, still mode, vertical panning mode, 3:2 pull down mode, zooming mode, horizontal motion mode, chaotic motion mode, fast motion mode, slow motion mode, and/or the like.

It is a further aspect of the present invention to provide an apparatus or system and in particular a video signal processing system, which is adapted to realize the inventive method for processing video signals or the steps thereof.

Said Apparatus or system are preferably implemented on a hybrid signal processing platform.

Additionally or alternatively, in said apparatus or system the motion estimation part may be realized in hardware and(or the frame rate conversion and/or the control block may be implemented in software in particular on a digital signal processor.

In said apparatus or system a global sum of vectors may generated on a hardware side and delivered together with a video stream to a digital signal processor.

Additionally or alternatively, in said apparatus or system local sums of motion vectors and/or picture statistic data may be generated on a software side.

According to a further aspect of the present invention a computer program product is provided comprising a computer program means which is adapted to realize an inventive method for processing video signals or the steps thereof and/or the inventive system for processing video signals when it is executed on a computer, a digital signal processing means, or the like.

Further additionally, the present invention provides a readable storage medium comprising the inventive computer program product.

These and further aspects of the present invention may be described by means of the following remarks:

The present invention relates inter alia to a scene adaptive, complexity reduced video signal processing method and system and in particular to a scene adaptive, complexity reduced frame rate conversion method and system.

### Background

A new frame rate conversion system is disclosed, which achieves high picture quality with a reduced need of calculation resources. The system comprises a motion estimator, which generates motion vectors on the incoming video signal, a frame rate converter, which utilizes the delivered motion vectors, and a control block, which classifies the video sequences. The control block is connected to the motion estimator and the frame rate converter to reconfigure them based on the result of the video sequence classifier. According to the control data coming from the control block, motion estimation is carried out with a different configuration and parameter set. The frame rate converter is also reconfigured to apply interpolation filters, which are specialized to the respective picture scene. This helps to reduce the complexity and therefore the amount of necessary CPU power, which is especially important for software implementation.

### Problems of prior art

Video signal processing based on picture analysis data, especially based on true motion vectors, is a widely used approach to achieve high-level picture quality for frame rate conversion applications. However, the achievable picture quality strongly depends on the quality of the motion estimation process and/or on the quality of the motion vectors. However, reality shows that a motion estimation process does not always deliver correct motion vectors and therefore, countermeasures have to be taken. There are a number of common methods e.g. for post-processing of motion vectors to improve their quality in terms of homogeneity or to remove spurious motion vectors. On the other side, there are several approaches to compensate wrong motion vectors in the frame rate conversion block.

Such a method is for example the use of enlarged filter apertures along with a non-linear ranking filter, which is computationally expensive with a look on software implementation on a digital signal processor, as we want to do it. Another system combines different methods concurrently and combines these results themselves again in another non-linear ranking filter, which results again in a computationally complex method. Another method applies a small, local analysis step of motion vectors before an actual interpolation process is carried out.

We implemented the picture processing system on a hybrid platform, where the motion estimation and parts of the picture processing block like sharpness enhancement or histogram equalization is done in hardware. A second part of the picture-processing block, namely the 50 Hz to 100 Hz FRC is done in software on a DSP. The new control block is implemented in software as well. Like all other motion estimators, also our motion estimator does not provide perfect motion vector fields. This makes some countermeasures necessary, however we have to consider the limited calculation resources provided by our DSP. Therefore, in the software implementation lays the main design constraint for the FRC algorithms.

State of the art techniques apply complicated vector field post processing steps, which are sometimes even to costly for hardware implementations in terms of memory usage and therefore cost effectiveness. Also concealment methods, which are applied to the picture processing block, i.e. the frame rate conversion algorithm, increase the complexity considerably as they introduce concurrent filter methods are another vector field post processing. With our current DSP technology, such methods are to complex for real-time performance.

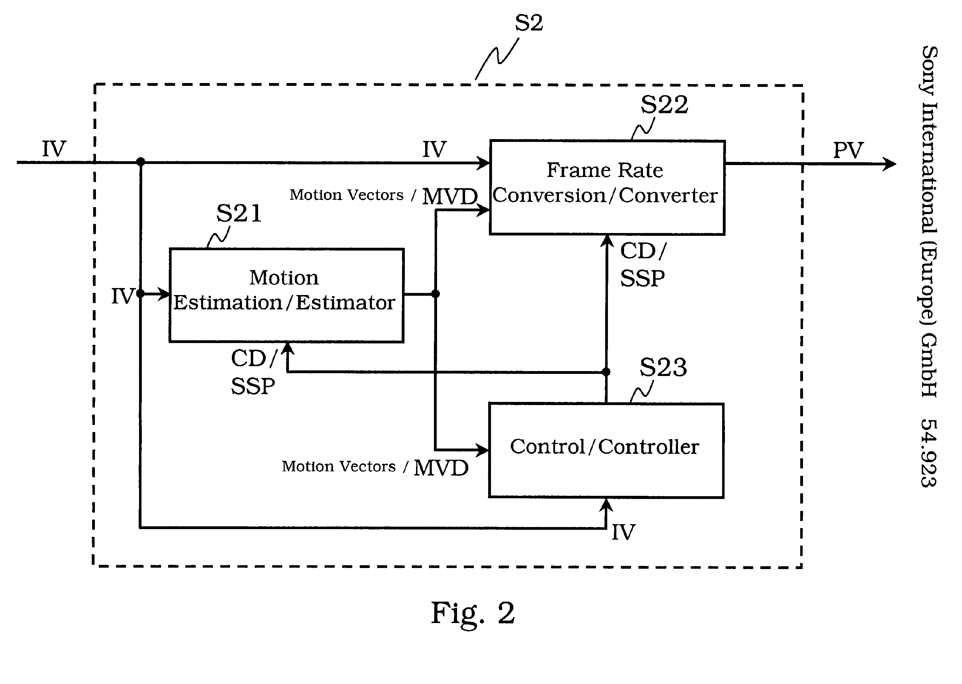

Our approach to solve this problem is to introduce a control block, which adapts the complete picture processing system to certain picture situations. A principle block diagram is shown in figure 2. An incoming video signal is passed to a motion estimator block and to a frame rate converter. The motion estimator produces motion vectors, which are delivered to the frame rate converter as well as to the control block. The control block derives statistical data out of the motion vectors and the incoming video signal. The control block evaluates this statistical data and derives out of this evaluation a classification of the actual video sequence. This classification data results in control information, which is used to reconfigure the motion estimator and the interpolator. The following sections describe the single blocks more in detail and relate to the actual implementation.

### Some Main Ideas of the Invention

### 1. Control Process or Control Block

Vector Statistic Data

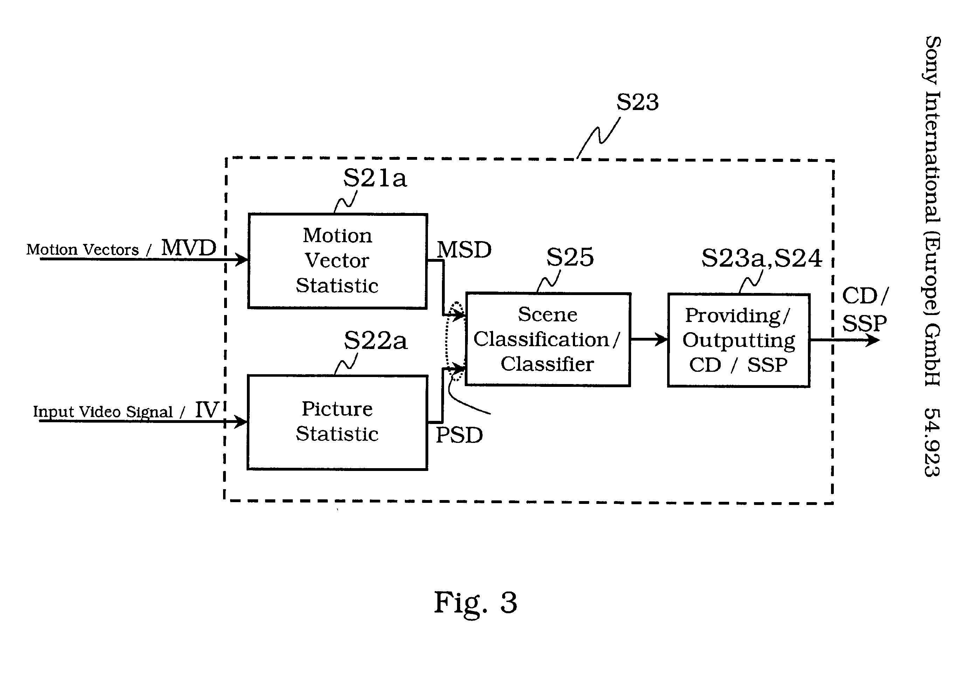

Figure 3 shows a principle block diagram of the control block. The vector statistic block computes out of the incoming motion vector field statistical data. In our current embodiment, this statistical data comprises the absolute sum of vectors, separately for x- and y- components of the motion vectors. Of course this can be extended to a more detailed sum of motion vectors like 'sum of all components in +x, -x, +y, -y direction', number of all null vectors, the respective sum over a part of the vector field, a vector histogram etc. The vector statistical data is delivered to the scene classifier block.

Sums of vectors may also be calculated after applying a coring process or the like.

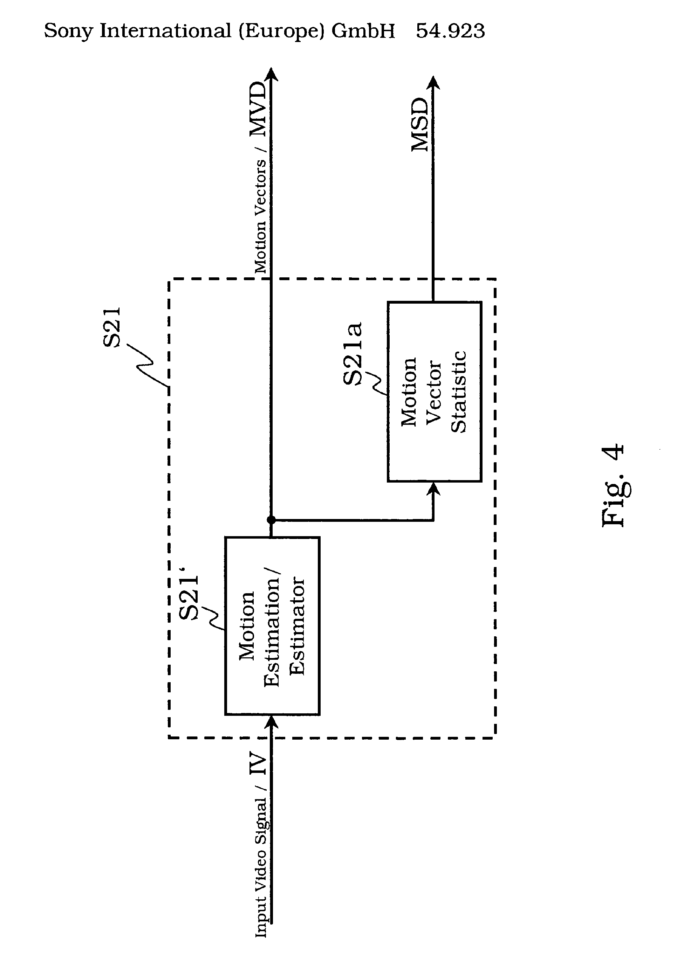

To make the implementation more effective, the collection of vector statistical data is done on the fly within the motion estimation process as far as possible. Figure 4 shows the preferred embodiment of this aspect. In our system, this is done in hardware, so it does not put additional load on the DSP.

### Picture Statistic Data

The picture statistic block shown in figure 3 computes statistical data directly on the incoming video signal. In our embodiment, this is the noise level and a static pixel difference. The calculation of the static pixel difference contains a coring function, which prevents small differences like quantization errors from being accumulated. Of course, variety of statistical data can be extended also in this case. It can be thought to add here a motion compensated pixel difference, which would require also access to motion vectors for this block. Also in this case, it is preferred to integrate as much as possible into other processing steps, where data is anyway accessed and memory is spent.

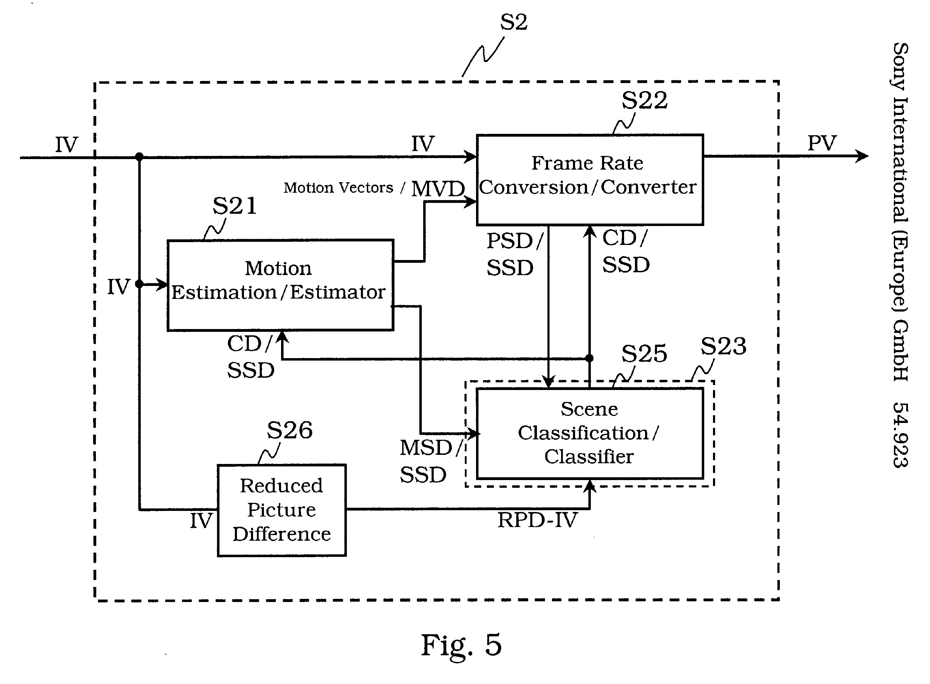

Figure 5 shows an overview over our actual embodiment of the system. In our case, the calculation of the static pixel difference is integrated into the frame rate converter as it is shown in figure 5, but it is also possible to integrate parts of it or everything into the picture analysis block. With this implementation, the static pixel difference is at least on field delayed, when it arrives at the control block. This does not matter e.g. for still picture detection. In case of scene change detection, this is not possible, as a scene change must be detected immediately in order to adapt e.g. the frame rate converter. In this case it is possible for example to calculate the pixel difference over the complete picture as it is done now, and to calculate another 'reduced' pixel difference only over a (maybe sub-sampled) part of the video picture. This does not put to much additional load on the DSP.

### Scene Classifier

The Scene Classifier evaluates the statistical data and delivers the control information to the motion estimator and the frame rate conversion block. In our implementation, we distinguish following cases: camera mode, standard film mode, non-standard film mode, scene change, still mode, horizontal panning and vertical panning mode. The control information contains reconfiguration data for the motion estimator and the frame rate converter. Of course, the list of distinguished cases can be extended e.g. with 3:2 pull down, zooming, horizontal motion, chaotic motion, fast or slow motion etc.

### 2. Motion Estimation Process or Motion Estimation Block

The motion estimator as such is not the center of interest here. The only thing, which is to be mentioned, is that it should be configured in all different cases in a way to achieve best possible vector quality for the respective use case. This means for example in still mode, that it should be configured very restrictive in order to avoid many random vectors on periodic structures. On the other side, it can be configured to be very flexible in case of fast motion or film mode. A scene-adaptive configuration also improves the stability of scene classifier. The right configuration is different from one estimator type to another and has to be found with experimenting. Of course it must be not too restrictive in order to make changes to other modes still possible.

### 3. Frame Rate Conversion Block

In our embodiment, the frame rate conversion block adapts to the picture scene by exchanging parts or its complete algorithm chain. It is a question of available CPU power, how complex the respective use case can be designed. In general it is desired to tailor the frame rate conversion in a way that only the really necessary filter complexity is applied to achieve the desired picture quality. In our embodiment for example it is necessary to apply a relatively complex filter for one of the interpolated fields in case of 'normal' camera mode, which is capable to correct some spurious vectors. However, this filter does not perform so well on vertical panning, so instead of making it more complex it is better to exchange it to a simple one, which has exactly the characteristic to perform good on such a sequence.

Another example is still mode, where the frame rate converter switches completely to non-motion compensated processing. It this way, spurious vectors, which are often produced on periodic structure do not produce any disturbances.

### Some Advantages

The main advantage of this approach is that the complete system is specialized for certain picture scenes. In this way, with the combination of a specially optimized estimator setting and a specialized filter type, comparably good or even better quality can be achieved as with a system that is more complex and which covers all the different use cases. Since this specialized filter types are commonly less complex as filters, which perform well in all situations, it is possible to reduce the necessary calculation power. This is important especially for the implementation on current DSPs.

In the following some characteristics with respect to different up-conversion models are given:

| **Camera mode**: | |
|---|---|
| Motion estimation: | The motion estimator was configured with its default settings, which were found with experimenting. |
| Frame rate conversion: | For the camera mode up-conversion use case, it was necessary to have a good error correction for wrongly estimated motion vectors to reduce or prevent miss-interpolations, which lead to picture artifacts We used here non-linear interpolation filters, which are capable to achieve this. |

| **Camera mode, vertical panning:** | |
|---|---|
| Motion estimation: | The motion estimator was kept with the same settings as in camera mode. |
| Frame rate conversion: | In case we have a picture scene, which shows vertical panning in case of camera, we had line flicker artifacts on fine, horizontal lines with our default camera mode up-conversion system. If this case is detected, some interpolation filters are substituted compared to the default camera case with filters which show in particular better performance for such scenes. An error correction was not so necessary since the motion vector fields in panning scenes are mostly of good quality. |

| **Film mode (standard/non-standard):** | |
|---|---|
| Motion estimation: | The motion estimator is configured with a parameter set, which shows best performance for film mode. This was found experimentally. |
| Frame rate conversion: | The up-conversion system is reconfigured according to the changed motion phases compared to camera mode. It is running in its default configuration for film mode. |
| Film mode, horizontal panning: | For horizontal panning in case of film mode, it was necessary to configure the motion estimator in a way that it covers the complete picture scene with vectors as good as possible. There the estimator was configured less restrictive in its estimation process compared to standard/non-standard film mode. |

| **Still mode:** | |
|---|---|
| Motion estimation: | In case of still mode, the motion estimator is configured very restrictive in its estimation process in order to reduce or prevent erroneous vectors e.g. on periodic structures. However it must not be configured too restrictive to prevent that it does not estimate any motion any more. |
| Frame rate conversion: | The up-conversion system is substituted with a non-motion-compensated one in order to prevent disturbing picture artifacts, which stem from erroneous vectors, which occur on periodic structures for examples. The static picture quality should be as good as possible. This is normally achievable with an ABAB up-conversion mode., however this performs badly in case of very small moving objects, or in case of very slow moving objects (of 'normal' size). Such kind of scenes are still handled by our still mode use case, because the benefits of motion compensation are not really visible and because |
| | it is not wanted that the system starts to toggle between still mode and motion mode. This means our still mode covers also 'low or small' motion. To achieve also here good quality, we apply a non-linear filter with a relatively large aperture compared to the motion compensated filters. This gives a very good compromise for static scenes, where it shows comparably good quality as ABAB but still performs very well on slowly moving objects. Another benefit is that is shows no switching artifacts when changing the mode. |
| | |

| **Scene Changes:** | |
|---|---|
| Motion estimation: | The motion estimator is kept in its actual setting. |
| Frame rate conversion: | In case a scene change is detected it is necessary to switch of motion compensation to prevent picture artifacts from mixing two neighboring fields. It is necessary to take only neighbor fields into account, which belong to the same camera shot. |

### Mode detection system:

The mode detection system was designed in a way to prevent toggling between to modes. Once the mode has been changed, it should stay there until a certain number of decision were made in favor of another one. It also takes only 'clear' decisions into account, which means that for example the detection of film, camera, vertical panning etc. is only done, if there is a certain amount of motion, which comes clearly not from wrongly estimated noise vectors.

The present invention will be described in some more detail by means of schematical drawings based on preferred embodiments of the present invention.
- **Fig. 1**: is a schematical block diagram elucidating the basic structure of the inventive method for processing video signals.
- **Fig. 2**: is a schematical block diagram of the step of processing input video signals according to a preferred embodiment of the present invention.
- **Fig. 3**: is a schematical block diagram elucidating a possible realization of the step of controlling according to a preferred embodiment of the present invention.
- **Fig. 4, 5**: demonstrate by means of schematical block diagrams two different realizations of the steps of motion estimation according to preferred embodiments of the invention.

In the following elements, blocks, steps and structures having comparable or equivalent functionalities are described by the same reference symbols and their description is not in each case of the occurrence repeated.

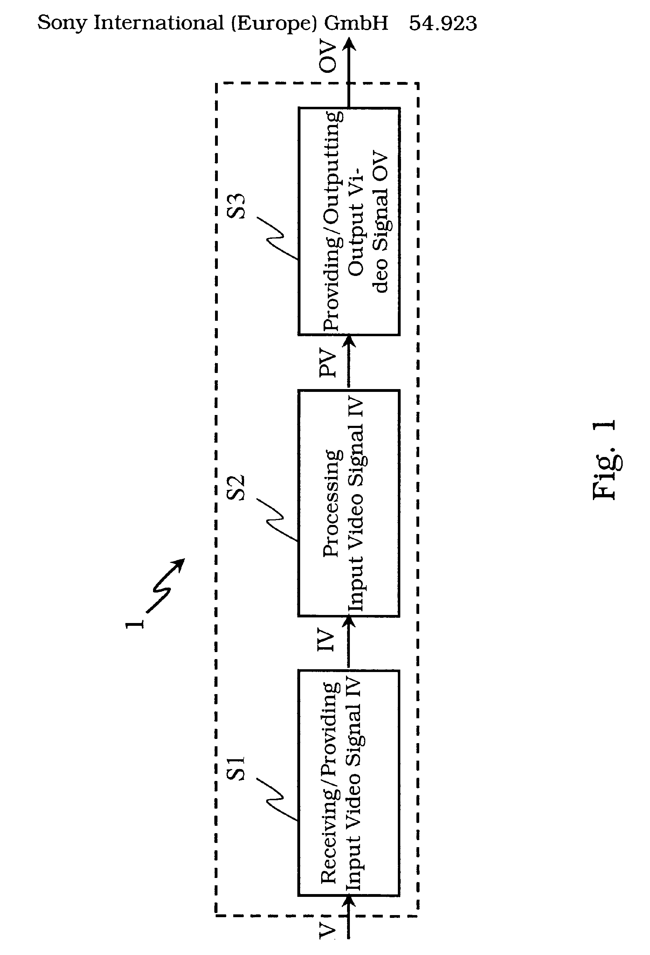

Fig. 1 is a schematical block diagram which demonstrates the basic structure of the inventive method 1 for processing video signals. The video signal V is received within a step of receiving and/or providing S1 of said video signal V as an input video signal IV. Said input video signal IV is provided and supplied to the following step of processing S2 said input video IV. As a result of said step of processing S2, a processed video signal PV is obtained. In a following step of outputting S3, said processed video signal PV is provided and/or output as an output signal OV.

Fig. 2 is a schematical block diagram which shows a basic structure of the step of processing S2 said input video IV according to a preferred embodiment of the inventive method. The received input video signal IV is parallely fed to steps or blocks of motion estimation S21, of frame rate conversion S22 and of controlling S23. Within said step of motion estimation S21 motion vectors or motion vector data MVD are extracted from said input video signal IV, in particular in the sense that said motion vector data MVD are derived or calculated upon said input video signal IV. Said motion vectors and/or said motion vector data MVD are supplied to said process of frame rate conversion S22 and to said process of controlling S23. Based on the supplied input video signal IV, the motion vectors and the motion vector data MVD, within said step or process of controlling S23 scene specific data SSD and accordingly control data CD or control information CD are generated which are then fed back into said process or step of motion estimation S21 and into said step or process of frame rate conversion S22 which in turn are adapted according to the specific picture scene contained in the input video signal IV. Based on the adaptation of the respective motion estimation process S21 and the frame rate conversion process S22 a processed video signal PV with an improved picture quality is obtained according to the present invention.

Fig. 3 demonstrates some details of the internal structure of a possible realization of the step or process of controlling S23 according to a preferred embodiment of the present invention. As already shown in Fig. 2, motion vectors and motion vector data MVD as well as said input video signal IV are supplied to the process of controlling S23. The motion vectors and the motion vector data MVD are evaluated within a process or step of S21 a for generating and/or providing motion vector statistic data MSD. On the other hand, said input video signal is supplied to a process of step S22a for obtaining picture statistic data PSD. As a result, said motion vector statistic data MSD and said picture statistic data PSD are supplied as scene specific data or SSD or as a part or pre-form thereof to a process or step of scene classifying S25 within said process or step of controlling S23. According to a further step S23b control information CD - which may also be referred to as a part of said scene specific data SSD - is generated and provided to an output.

Figure 4 shows an alternative realization of the step of motion estimation S21 when compared to the embodiments realized by Figs. 2 and 3. Here, the step or process of motion estimation S21 comprises the principle step of motion estimation S21' which generates the motion vectors and the motion vector data MVD directly, and said step S21a of generating and/or providing said motion vector statistic data MSD as already mentioned above. Said respective step or process S21a therefore receives the motion vectors or motion vector data MVD from the principle step S21' of motion estimation and generates and/or provides said motion vector statistic data MSD as output data. Additionally, the principle step S21' of motion estimation also outputs motion vectors or motion vector data MVD for external use.

Finally, Fig. 5 demonstrates by means of a further schematical block diagram in more detail an overview of the step of processing S2 the received input video signal IV to produce a processed video signal PV. Here, again the received input video signal IV is simultaneously fed or supplied to a process or step of motion estimation S21 and to a frame rate conversion in step S22. Additionally, said input video signal IV is supplied to a process S26 to produce reduced picture differences and then to the controlling step S23. Based on the supplied input video signal IV the step of motion estimation S21 generates motion vectors or motion vector data MVD to be output to said frame rate conversion step S22 as well as motion vector statistic data MSD as a part of said scene specific data SSD to be supplied to said step of controlling S23. Upon receipt of said input video signal IV in said motion vectors or motion vector data MVD said frame rate conversion step S22 produces picture statistic data PSD as a part of said scene specific data SSD to be output to said controlling step S23. Within said controlling step S23 a scene classifying step S25 uses said scene specific data in the sense of motion vector statistic data MSD and said picture statistic data PSD so as to generate and provide control information or control data CD which may also be referred to as scene specific data SSD which are fed back to said motion estimation step S21 and to said frame rate conversion step S22 to adapt the respective processing according to the respective picture scene contained in or described by said input video signal. Again, step S22 of frame rate conversion gives a processed video signal as an output signal.

The principle of this invention may also be applied to other video/signal processing chains, e.g. to a noise reduction system, or in general to approaches to optimize quality in a system, in particular the quality of a frame rate conversion system, e.g. with respect to the constraints given by a fixed hardware and/or a DSP with limited processing power.

In the sense of the invention control information or control data is e.g. meant to describe the situation where a motion estimator is reconfigured with a new parameter set, depending on the picture scene. For example, the so called estimation penalties which put a penalty on longer vectors may be increased, in particular for the case that the still mode is detected. Control information here means that if a certain use case is detected the signal processing chain gets new process parameters or even parts of the processing chain are substituted by more appropriate ones.

### Reference Symbols

- 1: inventive method for processing video signals
- CD: control information, control data
- IV: input video signal
- MSD: motion vector statistic data, vector statistic data
- MVD: motion vector data
- OV: output video signal
- PV: processed video signal
- S1: step/process of receiving an input video signal
- S2: step/process of processing a video signal
- S21: step/process of motion estimation
- S21': principle step of motion estimation
- S21a: step/process of generating/providing motion vector statistic data
- S22: step/process of frame rate conversion
- S22a: step/process of generating/providing picture statistic data
- S23: step/process of controlling
- S23a: generating/providing and/or outputting control information / control data
- S24: step/process of generating, providing and/or outputting scene specific data SSD
- S25: step/process of scene classifying
- S26: step/process of generating/providing reduced picture differences
- S3: step/process of outputting an output video signal
- SD: scene specific data
- V: video signal

## Claims

1. Method for processing video signals,
comprising steps of:
- receiving and/or providing (S1) an input video signal (IV),
- processing (S2) said input video signal (IV) comprising at least one step of picture content analysis, in particular a step of motion estimation (S21) and/or at least one step of video processing, in particular a step of frame rate conversion (S22) with respect to said input video signal (IV), thereby generating a processed video signal (PV), and
- providing and/or outputting (S3) said processed video signal (PV) or a derivative thereof as an output video signal (OV),
- wherein said step of processing (S2) said input video signal (IV) further comprises at least:
- a step of generating and/or providing (S24) scene specific data (SSD) with respect to said input video signal (IV) and/or its content which are descriptive with respect to at least one picture scene of pictures or video sequences represented by or contained in said input video signal (IV), and
- a step of controlling (S23) at least said step of picture content analysis, in particular said step of motion estimation (S21) and/or said step of video processing, in particular said step of frame rate conversion (S22), and
- wherein said step of controlling (S23) uses or is based on said scene specific data (SSD), in particular to thereby accordingly reconfigure at least said step of picture content analysis, in particular said step of motion estimation (S21) and/or said step of video processing, in particular said step of frame rate conversion (S22) for a scene adaptive processing (S2) and/or to thereby enable a high picture quality at a comparable reduced burden of calculation.

2. Method according to claim 1,
wherein said step of controlling (S23) includes a step of generating and/or providing (S23a) control data (CD) or control information.

3. Method according to claim 2,
wherein said step of controlling (S23) includes a step of supplying said control data (CD) or control information at least to said step of picture content analysis, in particular said step for motion estimation (S21) and/or said step of video processing, in particular said step of frame rate conversion (S22).

4. Method according to any one of the preceding claims,
wherein motion vector statistic data (MSD) or a derivative thereof are used as scene specific data (SSD) or as a part or pre-form thereof.

5. Method according to claim 4,
wherein a step of generating and/or providing (S21a) said motion vector statistic data (MSD) is performed.

6. Method according to claim 5,
wherein said step of generating and/or providing (S21a) said motion vector statistic data (MSD) is at least in part performed together with or within said step of picture content analysis, in particular said step of motion estimation (S21) and/or in particular within a respective common device, block or unit.

7. Method according to any one of the preceding claims 5 or 6, wherein said step of generating and/or providing (S21a) said motion vector statistic data (MSD) is at least in part performed together with or within said step of controlling (S23) and/or in particular within a respective common device, block or unit.

8. Method according to any one of the preceding claims 4 to 7,
wherein said motion vector statistic data (MSD) are designed to include and/or to describe one or a plurality of items from the group containing the items of absolute sum of vectors, in particular separately for x-components and y-components of motion vectors, sums of components of motion vectors in +x-, -x-, +y-, and/or -y-directions, number of all null vectors, respective sums over a part or parts of the field of motion vectors, vector histograms, and/or the like.

9. Method according to any one of the preceding claims,
wherein picture statistic data (PSD) or a derivative thereof are used as scene specific data (SSD) or as a part or pre-form thereof.

10. Method according to claim 9, wherein a step of generating and/or providing (S22a) said picture statistic data (PSD) is performed.

11. Method according to claim 10, wherein said step of generating and/or providing (S22a) said picture statistic data (PSD) is at least in part performed together with or within said step of video processing, in particular said step of frame rate conversion (S22) and/or in particular within a respective common device, block or unit.

12. Method according to any one of the preceding claims 10 or 11,
wherein said step of generating and/or providing (S22a) said picture statistic data (PSD) is at least in part performed together with or within said step of controlling (S23) and/or in particular within a respective common device, block or unit.

13. Method according to any one of the preceding claims 9 to 12,
wherein said picture statistic data (PSD) are designed to include and/or to describe one or a plurality from the group containing noise level, statistic pixel differences, motion compensation pixel differences, luminance histogram, and/or the like.

14. Method according to any one of the preceding claims,
wherein said step of controlling (S23) and in particular said step of generating and/or providing (S23a) said control data (CD) or control information includes or is realized by a step of scene classification (S23c) covering at least one or a plurality of cases from the group which contains the cases of camera mode, standard film mode, non-standard film mode, scene change mode, still mode, vertical panning mode, 3:2 pull down mode, zooming mode, horizontal motion mode, chaotic motion mode, fast motion mode, slow motion mode, and/or the like.

15. Apparatus and in particular video signal processing system,
which is adapted to realize a method for processing video signals according to any one of the claims 1 to 14 or the steps thereof.

16. Apparatus according to claim 15,
which is implemented on a hybrid signal processing platform.

17. Apparatus according to any one of the claims 15 or 16,
- wherein the motion estimation part is realized in hardware and
- wherein the frame rate conversion and/or the control block are implemented in software in particular on a digital signal processor.

18. Apparatus according to any one of the claims 15 to 17,
wherein a global sum of vectors is generated on a hardware side and delivered together with a video stream to a digital signal processor.

19. Apparatus according to any one of the claims 15 to 18,
wherein local sums of motion vectors and/or picture statistic data are generated on a software side.

20. Computer program product comprising computer program means adapted to realize a method for processing video signals according to any one of the claims 1 to 14 and/or the video signal processing system according to any one of the claims 15 to 19 when it is executed on a computer, a digital signal processing means, or the like.

21. Computer readable storage medium comprising a computer program product according to claim 20.
